# EUROPÄISCHE PATENTSCHRIFT

(11) **EP 2 161 553 B1**
(45) Veröffentlichungstag und Bekanntmachung des Hinweises auf die Patenterteilung: **13.11.2019**
(21) Anmeldenummer: 09011484.4
(22) Anmeldetag: 08.09.2009
(51) Int. Cl.: G01G 19/414, G01G 23/36, G01G 23/42

(54) **Ladenwaage**
Retail scale
Balance commerciale

(30) Priorität: 09.09.2008 DE 102008046500
(43) Veröffentlichungstag der Anmeldung: 10.03.2010
(73) Patentinhaber: Bizerba SE & Co. KG, 72336 Balingen (DE)
(72) Erfinder: Tudor, Andronic-Gorcea, 8500 Frauenfeld (CH)
(74) Vertreter: Huber, Meik

(56) Entgegenhaltungen:
- EP-A2- 1 359 527
- WO-A1-00/67110
- WO-A1-2004/079622
- DE-A1- 4 034 193
- DE-A1- 19 730 051
- DE-U1- 9 204 180
- US-A1- 2001 054 005
- US-A1- 2004 061 684

## Beschreibung

Die Erfindung betrifft eine Ladenwaage nach den Merkmalen des Oberbegriffs des Anspruchs 1.

Eine solche Ladenwaage ist aus der DE 40 34 193 A1 bekannt. Dort ist gezeigt, dass eine Ladenwaage über eine Schnittstelle mit mehreren Anzeigeschildern kommuniziert, die jeweils einzelnen Waren zugeordnet sind. Die Anzeigeschilder sind an Stirnseiten von Regalen angeordnet und werden von einer zentralen Empfangseinheit aus gesteuert und mit Strom versorgt.

In der Praxis werden Ladenwagen im Einzelhandel verwendet, um Waren wie z. B. Obst, Gemüse oder Fleisch und Wurstwaren abzuwiegen. Das Abwiegen kann dabei der Kunde in Selbstbedienung vornehmen oder von einem Verkäufer vornehmen lassen.

Aus der DE 102 42 147 A1 ist eine Ladenwaage bekannt, die eine Lastplatte und ein Display zur Anzeige von Wiegedaten aufweist.

Aus der DE 92 04 180 U1 ist eine Ladenwaage bekannt, die über eine Schnittstelle mit einer Mehrzahl von Displays verbunden ist.

Der Erfindung liegt die Aufgabe zugrunde eine Ladenwaage zu schaffen, die es auf einfache Art und Weise ermöglicht für einen Kunden Wareninformationen schnell und komfortabel darzustellen und die möglichst flexibel einzusetzen und einfach zu installieren bzw. zu warten ist.

Diese Aufgabe wird erfindungsgemäß mit einer Ladenwaage gemäß den Merkmalen des Anspruchs 1 gelöst.

Die Ladenwaage weist eine insbesondere drahtlose Schnittstelle zur Kommunikation mit mehreren Displays zur Anzeige von Wareninformationen für einen Kunden auf. Eines oder mehrere der Displays weisen jeweils eine Anzeige auf, die als bistabile LCD-Anzeige oder als E-Papier Anzeige ausgebildet ist. Vorteilhaft ist der geringe Stromverbrauch einer bistabilen LCD Anzeige oder einer E-Papier-Anzeige. Dadurch ist es möglich, auf eine zentrale Stromversorgung bzw. auf große Batterien bzw. Akkus zu verzichten und eine Installation ohne Verkabelungsaufwand zu verwirklichen. Dadurch können die Displays frei verteilt werden und an einer optimalen Stelle platziert werden bzw. optimal einer Ware zugeordnet werden. Von Vorteil ist, wenn jedes der Displays eine eigene Stromversorgung und eine eigene drahtlose Schnittstelle aufweist. Jedoch können unmittelbar benachbarte Displays auch miteinander über Kabel verbunden werden und über eine gemeinsame drahtlose Schnittstelle und/oder eine gemeinsame Stromversorgung agieren.

An der Waage ist zudem eine Anzeigevorrichtung zur Anzeige von Wareninformationen für einen Bediener der Waage vorhanden. Vorzugsweise erfolgt über die Anzeigevorrichtung auch eine Bedienung der Ladenwaage. Eine Steuerungsvorrichtung steuert die Ladenwaage, insbesondere eine Informationsanzeige und die Kommunikation über die insbesondere drahtlose Schnittstelle mit einer Mehrzahl von Displays. Eine Mehrzahl von Displays umfasst hier eine Anzahl von wenigstens drei oder mehr Displays.

Es können über die insbesondere drahtlose Schnittstelle zu jeder Zeit aktuelle Wareninformationen oder wechselnde Wareninformationen von der Ladenwaage zu den Displays übertragen werden. So kann insbesondere eine zeitlich wechselnde Wareninformation, wie z. B. der Preis der Ware oder Promotionsangebote, jederzeit aktuell dargestellt werden. Auch können speziell solche Informationen dargestellt werden, die ein Kunde nachfragt. Bei einer Änderung von Wareninformation braucht daher kein zusätzlicher Aufwand wie z. B. ein Tausch von Etiketten mehr betrieben werden. Wareninformation umfasst dabei Merkmale einer Ware wie deren Bezeichnung, Preis und Beschaffenheit. Die Wareninformation kann vorzugsweise auch weitere Merkmale wie eine Information über Herkunft und/oder Beschaffenheit und/oder Qualität und/oder Inhaltsstoffe und/oder Zusatzinformation wie Rezeptvorschläge und Sonderangebote oder ein Gütesiegel umfassen.

In einer Ausführung kann vorgesehen sein, dass die Anzeigevorrichtung eine Eingabevorrichtung zum Bedienen der Ladenwaage umfasst. Insbesondere kann die Anzeigevorrichtung eine Tastatur und/oder einen Touchscreen, also einen berührungsempfindlichen Bildschirm aufweisen. Über die Bedienvorrichtung kann einerseits die Waage bedient werden und andererseits können gezielte Abfragen zu einer gewünschten Ware getätigt werden und das Abfrageergebnis über die Schnittstelle zu den Displays der einzelnen Waren gesandt werden. Die Wareninformation kann dabei in einem Warenspeicher abgelegt sein, auf den die Steuerungsvorrichtung zugreift. Es ist vorgesehen, dass der Warenspeicher nach Art einer Datenbank strukturiert ist, in der die einzelnen Merkmale der Wareninformation abgespeichert sind. Der Warenspeicher kann dabei innerhalb eines Gehäuses der Ladenwaage angeordnet sein, oder < außerhalb der Ladenwaage an einer zentralen Stelle angeordnet sein und mit der Ladenwaage bzw. der Steuerungsvorrichtung verbunden sein.

Es ist vorgesehen, dass die Displays den Waren räumlich zugeordnet sind, insbesondere benachbart zu den Waren angeordnet sind, und die Funktion von Etiketten erfüllen. Die Displays können z. B. in einer Warenauslage in räumlicher Nähe der Ware angeordnet sein und einen Preis der Ware anzeigen. Auch weitergehende Informationen über die Ware wie z. B. deren Beschaffenheit, Herkunft, Qualität usw. kann auf den Displays angezeigt werden, indem diese von der Steuerungsvorrichtung über die Schnittstelle übertragen wird.

Es ist vorgesehen, dass die Displays jeweils eine eindeutige Adresse aufweisen. Die Steuerungsvorrichtung kann so gezielt eines oder mehrere der Displays selektieren und ansprechen. Zur Erhöhung der Datensicherheit werden die Adressen der gültigen Displays in der Steuerungsvorrichtung abgespeichert.

Zum Anmelden eines neuen Displays bei der Ladenwaage ist vorgesehen, dass die Steuerungsvorrichtung einen Anmeldemodus aufweist, bei dem ein neues Display ein Datum zur Anmeldung sendet und dessen Adresse dann von der Steuerungsvorrichtung als gültig abgespeichert wird, so dass dieses Display zukünftig mit der Waage kommunizieren kann.

Es kann auch vorgesehen sein, eine Adresse eines Displays an der Ladenwaage über eine Tastatur oder Touchscreen von Hand einzugeben oder zu bestätigen um diese in der Steuerungsvorrichtung zu speichern und das Display an der Waage anzumelden.

Es ist vorgesehen, dass die Steuerungsvorrichtung eine Adresse eines Displays mit der zugehörigen Ware verknüpft und abspeichert, vorzugsweise in dem Warenspeicher abspeichert. So kann die Steuerungsvorrichtung selektiv Informationen einer Ware zu dem zugehörigen Display senden. Es ist auch möglich, dass die Steuerungsvorrichtung einzelne Waren und zugehörige Displayadressen zu Warengruppen zusammenfasst um zu der Warengruppe gehörende Information selektiv an alle zugehörigen Displays zu senden.

In einer Ausführung ist zur vereinfachten Bedienung eines Kunden vorgesehen, dass über die Schnittstelle eine auf der zentralen Anzeigevorrichtung angezeigte Information auf eines oder mehrere der Displays übertragen werden kann. So kann z. B. eine Zusatzinformation zu einer Ware, für die ein Kunde sich interessiert, bedarfsweise auf einem der betreffenden Ware zugeordneten Display angezeigt werden.

Erfindungsgemäß ist vorgesehen, dass zur Montageerleichterung die Schnittstelle als drahtlose Schnittstelle, vorzugsweise als Funkschnittstelle oder Infrarotschnittstelle ausgebildet ist. Eine Verkabelung der Displays mit der Waage kann dadurch entfallen. Zudem ist erfindungsgemäß vorgesehen, dass die Displays jeweils eine eigene Stromversorgung, vorzugsweise eine Batterie oder ein Akku aufweisen, so dass die Displays einfach in der Nähe einer Ware aufgestellt werden können.

Erfindungsgemäß ist vorgesehen, dass die Schnittstelle bidirektional ausgebildet ist, so dass Informationen von der Steuerungsvorrichtung an die Displays gesendet werden können und diese aber auch Informationen zurück senden können. So können die Displays z. B. ein Bestätigungssignal über eine neue Datenanzeige senden.

Wenn es sich bei der Ware um frische Ware wie Fisch, Wurst oder Fleisch handelt, ist es für die Qualität der Ware unabdingbar, die Umgebungsbedingungen der Lagerung wie z. B. Lagertemperatur, Luftfeuchte oder Helligkeit einzuhalten. Bislang wird solche verderbliche Ware in einer Kühltheke gelagert, deren Temperatur an einem Ort gemessen wird. Eine solche Messung sagt aber nur bedingt etwas über die genauen Lagerbedingungen in der unmittelbaren Umgebung einer Ware aus. Erfindungsgemäß ist daher vorgesehen, dass die Displays einen Sensor oder mehrere Sensoren zum Messen von Temperatur und/oder Luftfeuchte und/oder Helligkeit aufweisen. Die Messwerte überträgt das Display über die Schnittstelle an die Steuerungsvorrichtung der Ladenwaage. Die Steuerungsvorrichtung speichert die Messwerte zusammen mit einem Zeitstempel und einer Identifikation der Ware in einem Messwertspeicher. So können für eine Qualitätssicherung die Lagerbedingungen für eine Ware über einen längeren Zeitraum dokumentiert werden. Es ist auch möglich, die Messwerte auf den Displays direkt anzuzeigen.

Um einen besonders geringen Stromverbrauch zu erzielen ist vorgesehen, dass die Anzeige als bistabile LCD-Anzeige, die nur beim Umschalten der Anzeige Strom benötigt, oder als sogenanntes elektronisches Papier bzw. E-Papier ausgebildet ist. Ein E-Papier kann beispielsweise als elektroforetische Anzeige ausgestaltet sein. Das ist eine dünne Anzeige, bei der zwischen zwei Elektroden viele Mikrokapseln nebeneinander angeordnet sind. In den Mikrokapseln befinden sich elektrisch geladene Farbpigmentpartikel, die abhängig der elektrischen Ladung der Elektroden entweder in die Tiefe oder an die Oberfläche der Mikrokapseln wandern und so dann sichtbar werden. So können die Farbpigmente abhängig von dem elektrischen Feld sichtbar oder unsichtbar werden. In den Mikrokapseln verbleiben die Farbpigmente dann für lange Zeit an dem jeweiligen Ort und stellen damit einen bestimmten Bildpunkt dar. Über viele als Matrix angeordnete Mikrokapseln kann man dann beliebige Bildinhalte stromsparend darstellen. Denn, es fließt nur bei einer Änderung des Bildinhaltes, also des elektrischen Feldes ein Strom, so dass die E-Papier Anzeige eine sehr geringe Stromaufnahme aufweist. Über die Mikrokapseln ergibt sich zudem eine sehr gute Ablesbarkeit der Bildinformation nach allen Richtungen, so dass der Ablesewinkel der Displays sehr hoch ist und man dadurch eine größere gestalterische Freiheit bei der Anordnung der Displays relativ zu einer Ware erhält.

Es ist jedoch in einer Variante auch ein Mischbetrieb der Ladenwaage mit Displays anderer Anzeigen denkbar, wobei einzelne Displays eine Anzeige aufweisen können die z.B. als LED-Anzeige (Leuchtdioden-Anzeige) oder Standard LCD-Anzeige (Flüssigkristall-Anzeige) ausgebildet ist.

Eine Anwendung der erfindungsgemäßen Ladenwaage ist im Lebensmittelbereich insbesondere im Einzelhandel bei Frischegütern vorgesehen. Jedoch kann die erfindungsgemäße Waage auch beim Verkauf von nach Gewicht abzupackenden Kleinteilen wie Schrauben, Muttern oder sonstigen Bauteilen erfolgen.

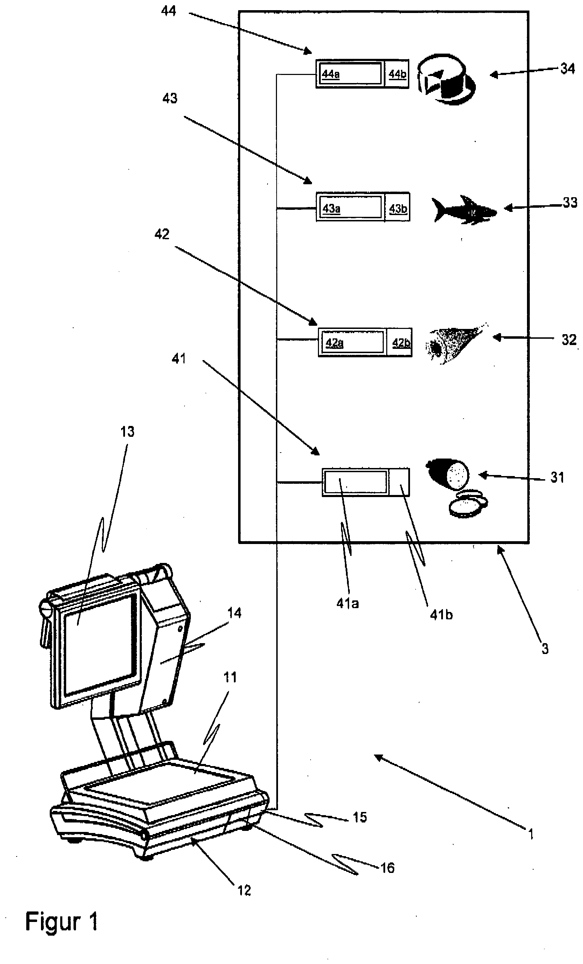

Ein Ausführungsbeispiel der Erfindung ist in der Figur schematisch dargestellt und in der dazugehörenden Beschreibung beschrieben.

Die Figur zeigt eine Ladenwaage 1. Diese weist ein Gehäuse 12 mit einer Last- bzw. Wiegeplatte 11 auf. Das Gehäuse 12 ist an seiner Unterseite über Füße auf einer ebenen Fläche, z. B. einer Verkaufstheke, abstellbar. Die Füße sind in der Höhe verstellbar, um zu gewährleisten, dass die Ladenwaage 1 auch bei unebenem Untergrund immer genau horizontal ausgerichtet ist. In dem Gehäuse 12 ist ein nicht dargestellter Gewichtsensor zum Erfassen des Gewichts eines auf die Lastplatte 11 aufgelegten Gegenstandes, also der zu wiegenden Ware, angeordnet.

Das Gehäuse 12 weist zudem einen integrierten Drucker 14 zum Drucken von Etiketten und eine Anzeigevorrichtung mit einem Touch-Screen 13 auf. Der Touch-Screen 13 dient sowohl zur Anzeige als auch zur Eingabe von Daten und/oder Informationen. Eine Steuerungsvorrichtung 16 ist innerhalb des Gehäuses 12 angeordnet und dient der Steuerung des Touch-Screens 13 und des Druckers 14. Über eine innerhalb des Gehäuses 12 angeordnete Schnittstelle 15 ist die Steuerungsvorrichtung 16 mit vier Displays 41, 42, 43, 44 verbunden. Die Verbindung der Schnittstelle 15 mit den Displays ist durch Verbindungslinien angedeutet. Die Steuerungsvorrichtung 16 und die Schnittstelle 15 sind jeweils als Einschubmodul auswechselbar in dem Gehäuse der Ladenwaage 1 integriert.

Die Displays weisen jeweils eine Anzeige 41a, 42a, 43a, 44a und einen Temperatursensor 41b, 42b, 43b, 44b auf und sind innerhalb einer Kühltheke 3 unmittelbar benachbart zu den einzelnen Waren angeordnet. Beispielhaft sind in der Figur die Waren Wurst 31, Fleisch 32, Fisch 33 und Käse 34 dargestellt.

Die Anzeigen 41a, 42a, 43a, 44a der Displays 41, 42, 43, 44 sind als E-Papier Anzeige ausgebildet und stellen in einem Standardfall den aktuellen Preis der Ware dar. Die Preisinformation erhält das Display über die Steuerungsvorrichtung 16. Diese entnimmt die Preisinformation wiederum einem zentralen Warenspeicher, dieser ist als elektronischer Speicher ausgeführt und der Übersichtlichkeit halber nicht dargestellt.

In dem zentralen Warenspeicher sind die Informationen zu den Waren abgelegt. Diese Information kann eine Preisinformation sein, aber auch Information zu Herkunft oder Art und Beschaffenheit der Waren. Durch die zentrale Ablage der Informationen können diese einfach gepflegt werden.

Ein beispielhafter Bedienvorgang kann wie folgt ablaufen. Ein Kunde tritt an die Warenauslage 3 und wendet sich an einen Verkäufer mit der Bitte um eine bestimmte Menge an Salami. Daraufhin selektiert der Verkäufer an dem Touchscreen der Ladenwaage die Warengruppe Salami. Über die Steuerungsvorrichtung 16 wird diese Information an diejenigen Displays weitergegeben, die Salami zugeordnet sind, so dass die Anzeigen dieser Displays beispielsweise eingefärbt werden oder blinken können um den Kunden auf das Angebot an Salami aufmerksam zu machen.

Ein alternatives Anliegen des Kunden könnte sein, dass er die Sonderangebote sehen möchte. Daraufhin gibt der Verkäufer über den Touch Screen die Information Sonderangebote ein, worauf die Steuerungsvorrichtung dann alle Displays ansteuert, die den Waren im Sonderangebot zugeordnet sind. Diese können dann wiederum eingefärbt werden oder blinken. Damit können dem Kunden auf einen Blick die Sonderangebote übersichtlich präsentiert werden.

## Patentansprüche

1. System umfassend eine Ladenwaage (1) und eine Mehrzahl von Displays (41, 42, 43, 44), wobei die Ladenwaage (1) mit einer Lastplatte (11), zum Ermitteln des Gewichts von Waren, und einer Anzeigevorrichtung (13) zur Anzeige von Daten, insbesondere eines Gewichtswertes einer auf der Lastplatte (11) befindlichen Ware, und mit einer Steuerungsvorrichtung (16) zur Steuerung der Anzeigevorrichtung (13), wobei die Steuerungsvorrichtung (16) über eine drahtlose Schnittstelle (15) mit der Mehrzahl von Displays (41, 42, 43, 44) verbunden ist und mit diesen kommuniziert, um auf diesen Displays (41, 42, 43, 44) Wareninformationen darzustellen,
**dadurch gekennzeichnet,**
**dass** die Displays (41, 42, 43, 44) in einer Warenauslage (3) so verteilt angeordnet sind, dass einem Display jeweils eine Ware zugeteilt ist und sich das Display benachbart zu der zugeteilten Ware befindet,
und **dass** die Displays (41, 42, 43, 44) jeweils eine Batterie oder einen Akku und eine Anzeige aufweisen, die als bistabile LCD-Anzeige oder als E-Papier Anzeige (41a, 42a, 43a, 44a) ausgebildet ist,
und **dass** zumindest eines der Displays, vorzugsweise alle Displays (41, 42, 43, 44), einen Temperatursensor und/oder Lichtsensor (41a, 41b, 41c, 41d) aufweisen und dass die Schnittstelle (15) als bidirektionale Schnittstelle ausgebildet ist und die Displays (41, 42, 43, 44) Messwerte des Temperatursensors und/oder Lichtsensors (41a, 41b, 41c, 41d) über die bidirektionale Schnittstelle (15) an die Steuerungsvorrichtung (16) senden.

2. System nach Anspruch 1,
**dadurch gekennzeichnet,**
**dass** die Displays (41, 42, 43, 44) jeweils eine eindeutige Adresse aufweisen.

3. System nach Anspruch 1 oder 2,
**dadurch gekennzeichnet,**
**dass** die Steuerungsvorrichtung (16) jeweils die Adresse eines Displays mit der zugehörigen Ware verknüpft und in einem Speicher, vorzugsweise einem Warenspeicher, ablegt.

4. System nach einem der Ansprüche 1 bis 3,
**dadurch gekennzeichnet,**
**dass** die drahtlose Schnittstelle eine Funkschnittstelle oder eine Infrarotschnittstelle ist.

5. System nach einem der vorhergehenden Ansprüche
**dadurch gekennzeichnet,**
**dass** die Kommunikation über die Schnittstelle (15) verschlüsselt erfolgt, indem die Schnittstelle (15) und die Displays (41, 42, 43, 44) jeweils Mittel zum Verschlüsseln und/oder Entschlüsseln von Daten aufweisen.

6. System nach einem der vorhergehenden Ansprüche,
**dadurch gekennzeichnet,**
**dass** die Steuerungsvorrichtung (16) mit einem Warenspeicher verbunden ist, der warenspezifische Daten speichert und die Steuerungsvorrichtung (16) Daten aus dem Warenspeicher an die Displays (41, 42, 43, 44) überträgt.

7. System nach Anspruch 6,
**dadurch gekennzeichnet,**
**dass** die Steuerungsvorrichtung (16) einen Messwertspeicher aufweist und die empfangenen Messwerte zusammen mit einer Zeitinformation und einer Displayidentifikation in diesem abspeichert.

8. System nach einem der vorhergehenden Ansprüche,
**dadurch gekennzeichnet,**
**dass** über die Anzeigevorrichtung (13) eine oder mehrere Waren selektierbar sind und die Steuerungsvorrichtung (16) die den selektierten Waren zugeordneten Displays ansteuert.

9. System nach Anspruch 7 oder 8,
**dadurch gekennzeichnet,**
**dass** die Steuerungsvorrichtung (16) die Displays durch Übertragen eines Befehls so ansteuert, so dass jeweils das auf der Anzeige angezeigte Bild der angesteuerten Displays seine Farbe oder Helligkeit oder Größe verändert, vorzugsweise in einem bestimmten Rhythmus verändert, insbesondere blinkt.

10. System nach einem der vorhergehenden Ansprüche,
**dadurch gekennzeichnet,**
**dass** die Steuerungsvorrichtung (16) über eine Waagenschnittstelle mit einer zweiten Ladenwaage verbunden ist und beide Ladenwaagen auf einen gemeinsamen Warenspeicher zum Übertragen von Wareninformation an die Displays (41, 42, 43, 44) zugreifen.

11. System nach einem der vorhergehenden Ansprüche,
**dadurch gekennzeichnet,**
**dass** die Steuerungsvorrichtung (16) über eine Waagenschnittstelle mit einer zweiten Ladenwaage verbunden ist und beide Ladenwaagen auf einen gemeinsamen Messwertspeicher zum Abspeichern oder Abrufen von Messwerten zugreifen.

## Claims

1. A system comprising a retail scale (1) and a multiplicity of displays (41, 42, 43, 44), the retail scale (1) comprising a load plate (11) for determining the weight of products, and a display device (13) for displaying data, in particular a weight value of a product on the load plate (11), and comprising a control device (16) for controlling the display device (13), the control device (16) being connected via a wireless interface (15) to the multiplicity of displays (41, 42, 43, 44) and communicating with the latter, in order to display product information on these displays (41, 42, 43, 44),
**characterized in that**
the displays (41, 42, 43, 44) are arranged to be distributed in a product display unit (3) such that each display is assigned a product and the display is adjacent to the associated product,
and **in that** the displays (41, 42, 43, 44) each have a battery or a rechargeable battery and a display, which is formed as a bistable LCD display or as an e-paper display (41a, 42a, 43a, 44a),
and **in that** at least one of the displays, preferably all the displays (41, 42, 43, 44) have a temperature sensor and/or light sensor (41a, 41b, 41c, 41d),
and **in that** the interface (15) is formed as a bidirectional interface and the displays (41, 42, 43, 44) transmit measured values from the temperature sensor and/or light sensor (41a, 41b, 41c, 41d) via the bidirectional interface (15) to the control device (16).

2. System according to Claim 1,
**characterized in that**
the displays (41, 42, 43, 44) each have a unique address.

3. System according to Claim 1 or 2,
**characterized in that**
the control device (16) in each case links the address of a display with the associated product and stores the same in a memory, preferably a product memory.

4. System according to one of Claims 1 to 3,
**characterized in that**
the wireless interface is a radio interface or an infrared interface.

5. System according to one of the preceding claims,
**characterized in that**
the communication via the interface (15) is carried out with encryption, by the interface (15) and the displays (41, 42, 43, 44) each having means for encrypting and/or decrypting data.

6. System according to one of the preceding claims,
**characterized in that**
the control device (16) is connected to a product memory, which stores product-specific data, and the control device (16) transfers data from the product memory to the displays (41, 42, 43, 44).

7. System according to Claim 6,
**characterized in that**
the control device (16) has a measured value memory and stores the received measured values, together with a piece of time information and a display identification, therein.

8. System according to one of the preceding claims,
**characterized in that**
one or more products can be selected via the display device (13), and the control device (16) activates the displays assigned to the selected product.

9. System according to Claim 7 or 8,
**characterized in that**
the control device (16) activates the displays by transmitting a command, so that the respective image of the activated display, which is displayed on the display, changes its colour or brightness or size, preferably in a specific rhythm, in particular flashes.

10. System according to one of the preceding claims,
**characterized in that**
the control device (16) is connected via a scale interface to a second retail scale, and both retail scales make access to a common product memory to transmit product information to the displays (41, 42, 43, 44).

11. System according to one of the preceding claims,
**characterized in that**
the control device (16) is connected via a scale interface to a second retail scale, and both retail scales make access to a common measured value memory in order to store or retrieve measured values.

## Revendications

1. Système comprenant une balance commerciale (1) et une multiplicité d'écrans (41, 42, 43, 44), dans lequel la balance commerciale (1) est reliée à un plateau de charge (11) pour déterminer le poids de produits, et à un dispositif d'affichage (13) pour l'affichage de données, en particulier d'une valeur de poids d'un produit se trouvant sur le plateau de charge (11), et à un dispositif de commande (16) pour la commande du dispositif d'affichage (13), dans laquelle le dispositif de commande (16) est relié par une interface sans fil à la multiplicité d'écrans (41, 42, 43, 44) et communique avec ceux-ci, afin de représenter sur ces écrans (41, 42, 43, 44) des informations relatives aux produits, **caractérisé en ce que**
les écrans (41, 42, 43, 44) sont disposés de façon répartie dans une exposition des produits (3), de telle manière qu'un produit soit respectivement attribué à un écran et que l'écran se trouve à proximité du produit qui lui est attribué, et
les écrans (41, 42, 43, 44) présentent respectivement une batterie ou un accumulateur et un affichage, qui est formé par un affichage LCD bistable ou un affichage par papier électronique (41a, 42a, 43a, 44a), et
au moins un des écrans, de préférence tous les écrans (41, 42, 43, 44) présente(nt) un capteur de température et/ou un capteur de lumière (41a, 41b, 41c, 41d), et l'interface (15) est une interface bidirectionnelle et les écrans (41, 42, 43, 44) envoient des valeurs de mesure du capteur de température et/ou du capteur de lumière (41a, 41b, 41c, 41d) par l'intermédiaire de l'interface bidirectionnelle (15) au dispositif de commande (16).

2. Système selon la revendication 1, **caractérisé en ce que** les écrans (41, 42, 43, 44) présentent chacun une adresse univoque.

3. Système selon une revendication 1 ou 2, **caractérisé en ce que** le dispositif de commande (16) relie chaque fois l'adresse d'un écran au produit correspondant et la dépose dans une mémoire, en particulier une mémoire de produits.

4. Système selon l'une quelconque des revendications 1 à 3, **caractérisé en ce que** l'interface sans fil est une interface radio ou une interface infrarouge.

5. Système selon l'une quelconque des revendications précédentes, **caractérisé en ce que** la communication par l'intermédiaire de l'interface (15) est effectuée sous forme codée, du fait que l'interface (15) et les écrans (41, 42, 43, 44) présentent respectivement des moyens pour le codage et/ou le décodage de données.

6. Système selon l'une quelconque des revendications précédentes, **caractérisé en ce que** le dispositif de commande (16) est relié à une mémoire de produits, qui mémorise des données spécifiques aux produits et le dispositif de commande (16) transmet des données provenant de la mémoire de produits aux écrans (41, 42, 43, 44).

7. Système selon la revendication 6, **caractérisé en ce que** le dispositif de commande (16) présente une mémoire de valeurs de mesure et mémorise dans celle-ci les valeurs de mesure reçues en même temps qu'une information de temps et une identification des écrans.

8. Système selon l'une quelconque des revendications précédentes, **caractérisé en ce qu'**un ou plusieurs produit(s) peut/peuvent être sélectionné(s) par l'intermédiaire du dispositif d'affichage (13) et le dispositif de commande (16) active les écrans associés aux produits sélectionnés.

9. Système selon une revendication 7 ou 8, **caractérisé en ce que** le dispositif de commande (16) active les écrans par transmission d'une instruction, de telle manière que l'image de l'écran activé affichée sur l'affichage change de couleur ou de luminosité ou de grandeur, de préférence change à un rythme déterminé, en particulier clignote.

10. Système selon l'une quelconque des revendications précédentes, **caractérisé en ce que** le dispositif de commande (16) est relié à une deuxième balance commerciale par une interface de balances et les deux balances commerciales ont accès à une mémoire des produits commune pour la transmission d'informations relatives aux produits aux écrans (41, 42, 43, 44).

11. Système selon l'une quelconque des revendications précédentes, **caractérisé en ce que** le dispositif de commande (16) est relié à une deuxième balance commerciale par une interface de balances et les deux balances commerciales ont accès à une mémoire de valeurs de mesure commune pour mémoriser et appeler des valeurs de mesure.
